# EUROPEAN PATENT SPECIFICATION

(11) **EP 4 485 641 B1**
(45) Date of publication and mention of the grant of the patent: **18.03.2026**
(21) Application number: 24169428.0
(22) Date of filing: 10.04.2024
(51) Int. Cl.: H01M 50/15, H01M 50/73

(54) **ENERGY-STORAGE DEVICE AND ELECTRICITY-CONSUMPTION APPARATUS**
ENERGIESPEICHERVORRICHTUNG UND ELEKTRIZITÄTSVERBRAUCHSVORRICHTUNG
DISPOSITIF DE STOCKAGE D'ÉNERGIE ET APPAREIL DE CONSOMMATION D'ÉLECTRICITÉ

(30) Priority: 30.06.2023 CN 202310798100
(43) Date of publication of application: 01.01.2025
(73) Proprietor: Hithium Tech HK Limited, Hong Kong (HK)
(72) Inventor: HU, Yuelin, Xiamen, 361100 (CN); XU, Weidong, Xiamen, 361100 (CN); TAN, Jiben, Xiamen, 361100 (CN)
(74) Representative: Santarelli

(56) References cited:
- EP-B1- 0 417 186
- WO-A1-99/19923
- US-A- 4 283 467

## Description

### TECHNICAL FIELD

The disclosure relates to the field of energy-storage technologies, and in particular, to an energy-storage device and an electricity-consumption apparatus.

### BACKGROUND

In existing energy-storage devices, such as battery cells, electrode assemblies are typically immersed in electrolytes to ensure the normal operation of the energy-storage devices. However, when the energy-storage device is placed flat, the consumption of the electrolyte during charging and discharging will lower the electrolyte level, which may cause that part of the electrode assembly in the energy-storage device cannot be immersed in the electrolyte, affecting the performance of the electrode assembly and thereby shortening the service life of the energy-storage device.

WO 99/19923 A1 relates to a liquid electrolyte battery including a housing with side walls, a housing base, and a cover, plate-shaped electrodes arranged in pairs in cells in a vertically standing configuration, a liquid electrolyte with a level that extends above the upper edge of the electrodes, and a liquid electrolyte circulation device.

US 4 283 467 A relates to an electric storage battery with gas-driven electrolyte flow between the electrode plates united into a plate block, which operates on the bubble pump principle and including at least two parallel transport pipes located on a nonconducting base plate, where the transport pipes have connected gas supply ducts and the base plate is designed to fit between the plate block and the housing wall, with the upper outlet apertures of the transport pipes positioned below the minimum electrolyte level on the side facing the plate block while the upper edge of the base plate remains above these outlet openings.

EP 0 417 186 B1 relates to a battery cell including a casing partially filled with a liquid electrolyte and positive and negative electrodes immersed in the electrolyte, where a valveless hydrostatic pump circulates electrolyte from an upper portion of the casing downward to a position near the bottom of the casing, with the pump located adjacent to a side wall of the casing and laterally offset from the electrodes, featuring an inlet mouth positioned above the at-rest upper surface of the electrolyte to capture overflow from laterally moving waves generated by cell movement, a tank connected to the inlet mouth to accumulate electrolyte and create a hydrostatic head above the at-rest electrolyte level, and a throat passage designed to guide the electrolyte downward from the tank to an outlet opening near the bottom under the pressure of the hydrostatic head while resisting upward flow due to cell movement, where the ratio of the average horizontal cross-sectional area of the inlet mouth to that of the throat passage is at least 2.5.

### SUMMARY

The invention is set out in the appended set of claims.

### BRIEF DESCRIPTION OF THE DRAWINGS

To describe the technical solutions in embodiments of the disclosure more clearly, the following describes the accompanying drawings required for describing the embodiments of the disclosure.
FIG. 1 is a diagram of an application scenario of an energy-storage system according to an embodiment of the disclosure.
FIG. 2 is a schematic structural diagram of an energy-storage device of the energy-storage system in FIG. 1.
FIG. 3 is a schematic exploded structural view of the energy-storage device in FIG. 2.
FIG. 4 is a schematic structural view of an assembly of an electrolyte pipeline and an insulation film of a housing assembly of the energy-storage device in FIG. 2.
FIG. 5 is a perspective view of the assembly of the electrolyte pipeline and the insulation film of the housing assembly in FIG. 4.
FIG. 6 is a schematic structural view of an electrolyte inlet pipe of the electrolyte pipeline in FIG. 4.
FIG. 7 is a schematic structural view of an electrolyte outlet pipe of the electrolyte pipeline in FIG. 4.

Reference numbers indicating main members are described as follows:
user load 300, electrical energy conversion device 200, energy-storage device 100, housing assembly 110, electrode assembly 120, end cover assembly 130, housing 110a, electrolyte pipeline 110b, insulation film 110c, opening 111, accommodating cavity 112, first electrode assembly 120a, second electrode assembly 120b, placement surface 114, appearance surface 115, electrolyte inlet pipe 11, electrolyte outlet pipe 12, electrolyte outlet hole 123, first portion 121, second portion 122, mounting hole 113.

### DETAILED DESCRIPTION

Due to that people's demand for energy is strongly correlated with time and space, in order to rationally utilize energy and improve the utilization rate of energy, it may need to store a form of energy via a medium or a device, or it may need to convert a form of energy into another form of energy and then store the other form of energy via a medium or a device. Stored energy may be released in a specific energy form based on future application needs. It is well known that to achieve the ambitious goal of carbon neutrality, fossil energy is mainly replaced by green energy to generate green electricity.

Currently, green energy mainly includes solar energy, wind energy, water potential, and the like. However, solar energy, wind energy, and the other forms of energy generally suffer from strong intermittency and large fluctuations, which can cause instability of the green power grid (insufficient electricity during peak electricity consumption, excess electricity during off-peak periods). Unstable voltages can also damage power systems. Therefore, insufficient electricity demand or insufficient power grid capacity may lead to the problem of "curtailment of wind and solar power".

To solve the problems of insufficient electricity demand or insufficient power grid capacity, it is necessary to rely on energy-storage devices. That is, through the energy-storage devices, electrical energy can be converted into other forms of energy through physical or chemical means for storage, and the stored energy in the energy-storage devices can be converted back into electrical energy for release when needed. In simple terms, the energy-storage devices are similar to large-scale "electric power banks" that store electrical energy when solar and wind energy are abundant and release the stored electrical energy when needed.

The current application scenarios of energy storage are relatively extensive, including power-generating-side energy storage, grid-side energy storage, renewable energy grid integration energy storage, and user-side energy storage. The corresponding types of energy-storage devices include:
(1) large-scale energy-storage containers used in grid-side energy-storage scenarios, which can serve as a high-quality active and reactive power regulation power supply in a power grid, realize load matching of electrical energy in time and space, enhance the ability to integrate renewable energy, and are significant in terms of grid system standby, alleviating peak load supply pressure, and peak shaving and frequency regulation;
(2) small to medium-sized energy-storage cabinets used in industrial and commercial energy-storage scenarios (banks, shopping malls, etc.) on the user side, as well as small-sized household energy-storage boxes used in household energy-storage scenarios, which may mainly operate in a "peak shaving and valley filling" mode. Since there is a significant price difference in electricity costs between peak and off-peak periods according to electricity demand, in a case where users have energy-storage devices, the users can typically charge the energy-storage cabinet/box during off-peak periods to reduce costs. During peak electricity price periods, the users can discharge the electricity stored in the energy-storage device for use to lower electricity costs. Additionally, in remote areas and regions prone to natural disasters such as earthquakes and hurricanes, the household energy-storage devices can serve as a standby power supply for users and the power grid, eliminating the inconvenience caused by frequent power outages due to disasters or other reasons.

The disclosure provides an energy-storage device and an electricity-consumption apparatus, which can ensure that electrode assemblies of the energy-storage device are all immersed in an electrolyte, thereby preventing the performance of the electrode assemblies from being affected, and prolonging the service life of the energy-storage device.

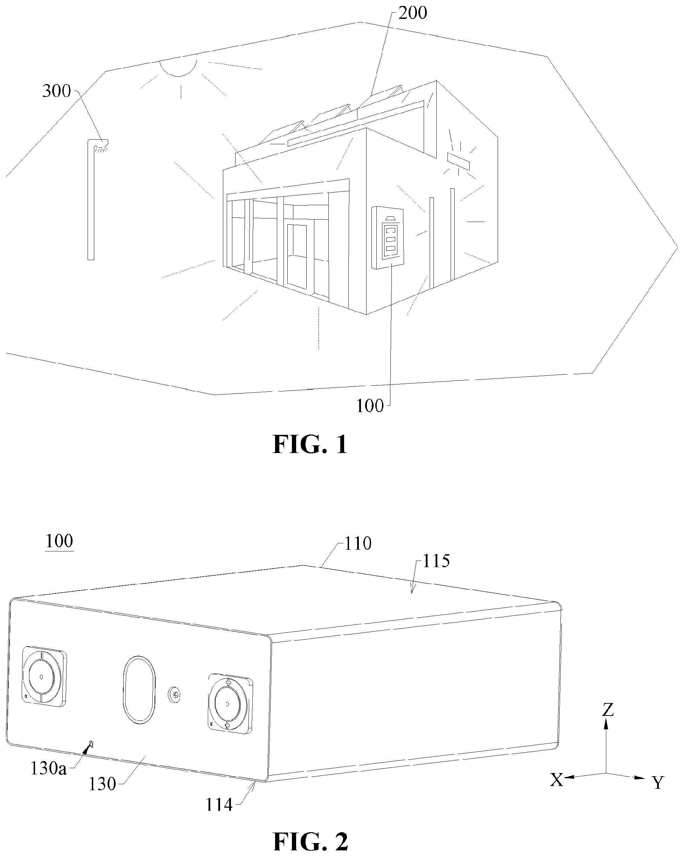

Referring to FIG. 1, FIG. 1 is a diagram of an application scenario of an energy-storage system according to an embodiment of the disclosure.

A household energy-storage scenario on a user side is taken as an example for illustration. FIG. 1 illustrates a household energy-storage system. The household energy-storage system includes an energy-storage device 100, an electrical energy conversion apparatus 200 (such as a photovoltaic panel), and a user load 300 (such as a street lamp, a household appliance, etc.). The energy-storage device 100 may be a small-size energy-storage box, and can be installed on an outdoor wall through wall mounting. Specifically, the electrical energy conversion apparatus 200 may convert solar energy into electrical energy during off-peak electricity price periods, and store the electrical energy into the energy-storage device 100. The electrical energy stored in the energy-storage device 100 can then be configured to power the user load 300 during peak electricity price periods, or during grid power outages, blackouts, or loss of electricity.

In combination with the aforementioned cases of energy storage through physical or electrochemical means, electrochemical energy-storage is taken as an example, and the energy-storage device 100 includes at least one group of chemical batteries. Chemical elements in the chemical batteries are used as an energy-storage medium, so that a charging and discharging process can be achieved through a chemical reaction or change of the energy-storage medium. In simply terms, the electrical energy generated by the optical energy and wind energy can be stored in at least one group of chemical batteries through a chemical reaction or change of an energy-storage medium, and when the usage of the external electrical energy peaks, the electrical energy stored in the at least one group of chemical batteries can be released for use through the chemical reaction or change of the energy-storage medium, or transferred to areas with insufficient electricity for use.

The following will clearly and completely describe the technical solutions in the embodiments of the disclosure with reference to the accompanying drawings in the embodiments of the disclosure.

The embodiments of the disclosure provide the energy-storage device 100. The energy-storage device 100 may be, but is not limited to, a battery cell (such as a secondary battery) and a device such as a battery module, a battery pack, a battery system, and the like formed by battery cells. The battery cell may be a lithium-ion battery, a lithium-sulfur battery, a sodium lithium-ion battery, a sodium-ion battery, a magnesium-ion battery, etc. The battery cell may be cylindrical, flat, rectangular, etc., and the embodiments of the disclosure are not limited thereto.

The following describes the energy-storage device 100 in detail by taking an example in which the energy-storage device 100 is a prismatic battery cell.

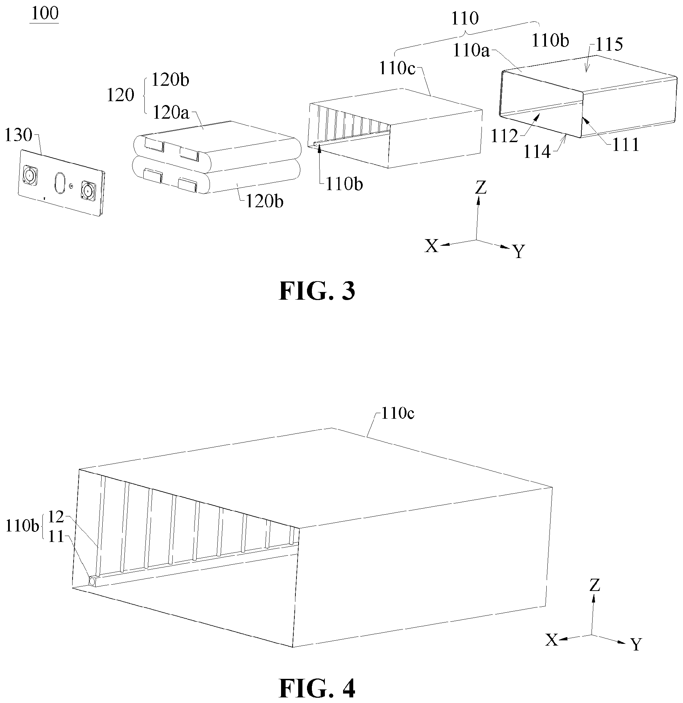

Referring to FIGS. 2 and 3, FIG. 2 is a schematic structural diagram of the energy-storage device 100 of the energy-storage system in FIG. 1, and FIG. 3 is a schematic exploded structural view of the energy-storage device 100 in FIG. 2. For ease of illustration, a length direction of the energy-storage device 100 is defined as the X-axis direction, a width direction of the energy-storage device 100 is defined as the Y-axis direction, and a thickness direction of the energy-storage device 100 is defined as the Z-axis direction. The X-axis direction, the Y-axis direction, and the Z-axis direction are perpendicular to one another.

The energy-storage device 100 includes a housing assembly 110, an electrode assembly 120, and an end cover assembly 130. The electrode assembly 120 and the end cover assembly 130 are both mounted to the housing assembly 110. The housing assembly 110 includes a housing 110a, an electrolyte pipeline 110b, and an insulation film 110c. Both the electrolyte pipeline 110b and the insulation film 110c are mounted inside the housing 110a. Specifically, the housing 110a includes a placement surface 114 and an appearance surface 115. The appearance surface 115 is opposite to the placement surface 114 in the thickness direction of the energy-storage device 100 (i.e., the Z-axis direction illustrated). The housing 110a further defines an opening 111 and an accommodating cavity 112. The accommodating cavity 112 is in communication with the opening 111. Specifically, both the electrolyte pipeline 110b and the insulation film 110c are received in the accommodating cavity 112. In addition, the accommodating cavity 112 is also configured for receiving an electrolyte.

The electrode assembly 120 is accommodated in the accommodating cavity 112. At least part of the electrode assembly 120 is immersed in the electrolyte. It may be understood that, the electrode assembly 120 has a separator (not illustrated). The separator can absorb the electrolyte through capillary action, so that the electrolyte can impregnate the electrode assembly 120. Exemplarily, the electrode assembly 120 is a wound electrode assembly. Specifically, the electrode assembly 120 is mounted inside the electrolyte pipeline 110b and the insulation film 110c. In other words, the electrolyte pipeline 110b and the insulation film 110c are positioned between the electrode assembly 120 and the housing 110a. In the embodiments, there may be two electrode assemblies 120. The two electrode assemblies 120 include a first electrode assembly 120a and a second electrode assembly 120b. The first electrode assembly 120a is electrically connected to the second electrode assembly 120b. The first electrode assembly 120a is arranged on the top side of the second electrode assembly 120b. In some other embodiments, there may be one electrode assembly 120, which is not limited herein.

In the embodiments, the end cover assembly 130 is mounted on one side, in the length direction (i.e., the Y-axis direction illustrated), of the housing 110a. The end cover assembly 130 seals the opening 111. The end cover assembly 130 is electrically connected to the electrode assembly 120. The end cover assembly 130 is provided with a placement indicator 130a. The placement indicator 130a is on one side of the end cover assembly 130 close to the placement surface 114. The placement indicator 130a can be configured to indicate the placement surface 114 of the energy-storage device 100. When the energy-storage device 100 is placed flat, it can ensure that an electrolyte inlet pipe 11 of the electrolyte pipeline 110b is immersed in the electrolyte.

It may be noted that, directional terms such as "top" and "bottom" used in the disclosure are described with reference to the orientations illustrated in FIG. 1. A direction towards the positive Z-axis position is referred to as "top", and a direction towards the negative Z-axis direction is referred to as "bottom". The terms are not intended to indicate or imply that the device or component referred to must have a specific orientation, or be constructed and operated in a specific orientation, and therefore cannot be construed as limitations to the disclosure.

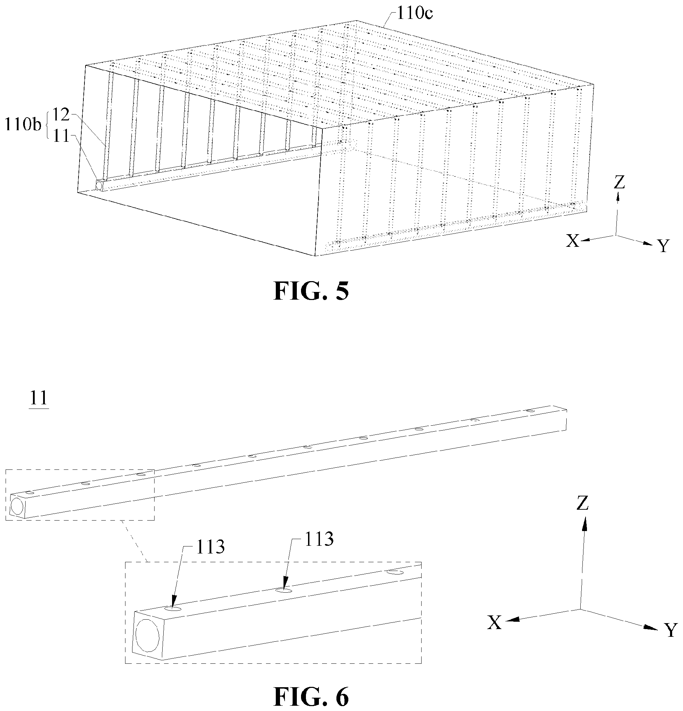

Referring to FIGS. 4-6, FIG. 4 is a schematic structural view of an assembly of the electrolyte pipeline 110b and the insulation film 110c of the housing assembly 110 of the energy-storage device 100 in FIG. 2, FIG. 5 is a perspective view of the assembly of the electrolyte pipeline 110b and the insulation film 110c of the housing assembly 110 in FIG. 4, and FIG. 6 is a schematic structural view of the electrolyte inlet pipe 11 of the electrolyte pipeline 110b in FIG. 4.

In the embodiments, the insulation film 110c is disposed inside the housing 110a. The insulation film 110c defines an opening (not illustrated) on one side of the insulation film 110c facing the end cover assembly 130. The electrode assembly 120 and the electrolyte pipeline 110b are both disposed inside the insulation film 110c. The electrolyte pipeline 110b is located between the electrode assembly 120 and the insulation film 110c. In the embodiments, the insulation film 110c is a Mylar film. Exemplarily, the insulation film 110c and the electrolyte pipeline 110b may be fixed through ultrasonic heat fusion. The insulation film 110c may not only prevent direct contact between the electrode assembly 120 and the housing 110a, thus avoiding short circuit of the electrode assembly 120, but also prevent the electrolyte pipeline 110b and the electrode assembly 120 from being scratched during installation to the housing 110a.

In the embodiments, the electrolyte pipeline 110b is configured to absorb the electrolyte and make the electrolyte to flow back to a surface of the electrode assembly 120 to impregnate the electrode assembly 120. The electrolyte pipeline 110b includes the electrolyte inlet pipe 11 and an electrolyte outlet pipe 12. The electrolyte outlet pipe 12 is fixedly mounted to the electrolyte inlet pipe 11. Exemplarily, the electrolyte inlet pipe 11 is in an interference fit with the electrolyte outlet pipe 12, thereby ensuring stability of assembly between the electrolyte inlet pipe 11 and the electrolyte outlet pipe 12. In some other embodiments, the electrolyte inlet pipe 11 and the electrolyte outlet pipe 12 may also be fixedly mounted in an adhesive manner.

In the energy-storage device 100 of the disclosure, the electrolyte pipeline 110b is provided. The difference between the internal pressure and the external pressure of the electrolyte inlet pipe 11 of the electrolyte pipeline110b is utilized, so that the electrolyte can flow from the electrolyte inlet pipe 11 into the electrolyte outlet pipe 12 and flow out through multiple electrolyte outlet holes 123 of the electrolyte outlet pipe 12. This enables the electrolyte to be dripped onto a surface of the electrode assembly 120, so that the electrode assembly 120 can be immersed in the electrolyte, thereby ensuring that the electrode assembly 120 remains fully immersed in the electrolyte. Therefore, the performance of the electrode assembly 120 can be prevented from being affected, and the service life of the energy-storage device 100 can be prolonged.

In the embodiments, the electrolyte inlet pipe 11 is located at one side of the electrode assembly 120, and the electrolyte inlet pipe 11 is in communication with the interior of the housing 110a. At least part of the electrolyte inlet pipe 11 is immersed in the electrolyte to ensure that the electrolyte can smoothly enter the electrolyte inlet pipe 11 and flow into the entire electrolyte pipeline 110b, thereby impregnating the electrode assembly 120. In addition, when the electrolyte is consumed, an external pressure of the electrolyte inlet pipe 11 is greater than an internal pressure of the electrolyte inlet pipe 11. Specifically, a difference between the external pressure of the electrolyte inlet pipe 11 and the internal pressure of the electrolyte inlet pipe 11 ranges from 0.2 MPa to 0.3 MPa.

It may be understood that, during operation of the energy-storage device 100, a large amount of gas will be generated due to consumption of the electrolyte, causing an increase in the external pressure of the electrolyte inlet pipe 11. Consequently, a difference between the external pressure of the electrolyte inlet pipe 11 and the internal pressure of the electrolyte inlet pipe 11 occurs, allowing the electrolyte to enter the electrolyte inlet pipe 11 and flow into the entire electrolyte pipeline 110b, thereby achieving a backflow electrolyte-supplementing function.

In the embodiments, the electrolyte inlet pipe 11 is implemented as two electrolyte inlet pipes 11. In the width direction (i.e., the Y-axis direction illustrated) of the energy-storage device 100, the two electrolyte inlet pipes 11 are spaced apart from each other. One of the two electrolyte inlet pipes 11 is located at one of two opposite sides of the electrode assembly 120, and the other of the two electrolyte inlet pipes 11 is located at the other of two opposite sides of the electrode assembly 120. The two electrolyte inlet pipes 11 are both in communication with the interior of the housing 110a. The electrolyte in the housing 110a can flow into the electrolyte pipeline 110b through the electrolyte inlet pipe 11. Exemplarily, the two electrolyte inlet pipes 11 are both circular pipelines. In a height direction (i.e., the Z-axis direction illustrated) of the energy-storage device 100, a ratio of a height of the electrolyte inlet pipe 11 to a height of the electrode assembly 120 ranges from 1/6 to 1/3. Exemplarily, a diameter of the electrolyte inlet pipe 11 ranges from 5 mm to 10 mm, facilitating subsequent processing of the electrolyte inlet pipe 11.

Each electrolyte inlet pipe 11 defines multiple mounting holes 113. The multiple mounting holes 113 are arranged at intervals in a length direction of the electrolyte inlet pipe 11. Each mounting hole 113 extends, in a thickness direction of the electrolyte inlet pipe 11, through a pipe wall of the electrolyte inlet pipe at one side of the electrolyte inlet pipe 11. Exemplarily, the multiple mounting holes 113 are circular holes. In some other embodiments, the multiple mounting holes 113 may also be square holes or other irregular holes.

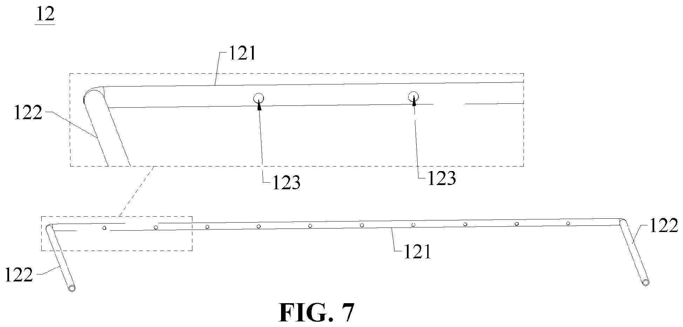

Referring to FIGS. 4, 5, and 7, FIG. 7 is a schematic structural view of the electrolyte outlet pipe 12 of the electrolyte pipeline 110b in FIG. 4.

In the embodiments, the electrolyte outlet pipe 12 defines the multiple electrolyte outlet holes 123. The multiple electrolyte outlet holes 123 are arranged at intervals in sequence. Each electrolyte outlet hole 123 extends, in a thickness direction of the electrolyte outlet pipe 12, through a pipe wall of the electrolyte outlet pipe at one side of the electrolyte outlet pipe 12. Each electrolyte outlet hole 123 has an opening facing the electrode assembly 120. Each electrolyte outlet hole 123 has a diameter ranging from 0.5 mm to 1 mm. This arrangement can avoid an excessive flow of the electrolyte flowing out of the electrolyte outlet hole 123 and ensure that the electrolyte can flow to the entire first portion 121 of the electrolyte outlet pipe 12, so that a surface of the first electrode assembly 120a can be covered by the electrolyte, and the electrolyte can impregnate the two electrode assemblies 120.

In the embodiments, the electrolyte outlet pipe 12 is implemented as multiple electrolyte outlet pipes 12. The multiple electrolyte outlet pipes 12 are arranged at intervals in sequence. The multiple electrolyte outlet pipes 12 are all located at one side of the two electrolyte inlet pipes 11, and are fixedly mounted between the two electrolyte inlet pipes 11. Each electrolyte outlet pipe 12 is in communication with two electrolyte inlet pipes 11. Exemplarily, a number of electrolyte outlet pipes 12 ranges from 6 to 10, which allows the electrolyte flowing out of the electrolyte pipeline 110b to uniformly impregnate the electrode assembly 120, ensures a better impregnation effect of the electrolyte to the electrode assembly 120, and is also beneficial to lowering production costs.

For each of the multiple electrolyte outlet pipes 12, the electrolyte outlet pipe 12 includes a first portion 121 and two second portions 122. The first portion 121 faces the electrode assembly 120 of the energy-storage device 100 in the thickness direction of the energy-storage device 100 (i.e., the Z-axis direction illustrated). Specifically, the first portion 121 defines the multiple electrolyte outlet holes 123. One of the two second portions 122 is fixedly connected to one of two opposite ends of the first portion 121, the other of the two second portions 122 is fixedly connected to the other of the two opposite ends of the first portion 121. The two second portions 122 are both in communication with the first portion 121. In the width direction of the energy-storage device 100 (i.e., the Y-axis direction illustrated), one of the two second portions 122 is located at one of two opposite sides of the electrode assembly 120 of the energy-storage device 100, and the other of the two second portions 122 is located at the other of the two opposite sides of the electrode assembly 120 of the energy-storage device 100. Each of the two second portions 122 extends in a direction away from the first portion 121. Specifically, one end of each of the two second portions 122 away from the first portion 121 is fixedly mounted to one of the multiple mounting holes 113 of the electrolyte inlet pipe 11, and the two second portions 122 are both in communication with the electrolyte inlet pipe 11.

Specifically, during operation of the energy-storage device 100, the difference between the external pressure of the electrolyte inlet pipe 11 and the internal pressure of the electrolyte inlet pipe 11 makes the electrolyte to enter and fill the two electrolyte inlet pipes 11. Then, the electrolyte can flow from the two electrolyte inlet pipes 11 into the second portions 122 of multiple electrolyte outlet pipes 12, enter the first portions 121 through the second portions 122, and flow out through the multiple electrolyte outlet holes 123, so that the electrolyte can be evenly dripped onto the surface of the first electrode assembly 120a.

It may be understood that, the electrolyte will be consumed during operation of the energy-storage device 100, so that the electrolyte level is lowered, and thus the performance of the first electrode assembly 120a may be affected because the first electrode assembly 120a cannot be immersed in the electrolyte. Due to the presence of the electrolyte pipeline 110b, the electrolyte in the housing 110a can enter the electrolyte pipeline 110b under the action of the gas pressure, and then flow back to the surface of the first electrode assembly 120a through the electrolyte outlet holes 123, so that the first electrode assembly 120a can be immersed in the electrolyte. In this way, it is ensured that the two electrode assemblies 120 of the energy-storage device 100 can be immersed in the electrolyte for a long time, and the performance of the electrode assemblies 120 can be prevented from being affected, thereby prolonging the service life of the energy-storage device 100.

The disclosure further provides an electricity-consumption apparatus. The electricity-consumption apparatus includes the energy-storage device 100. The energy-storage device 100 is configured to power the electricity-consumption apparatus. The electricity-consumption apparatus may be a new energy vehicle, an electricity storage station, a server, and other devices requiring electricity.

## Claims

1. An energy-storage device (100), comprising an electrode assembly (120) and a housing assembly (110), wherein
the housing assembly (110) comprises a housing (110a) and an electrolyte pipeline (110b), and the electrolyte pipeline (110b) and the electrode assembly (120) are both mounted inside the housing (110a);
the electrolyte pipeline (110b) is located between the electrode assembly (120) and the housing (110a) and comprises an electrolyte inlet pipe (11) and an electrolyte outlet pipe (12), the electrolyte inlet pipe (11) is located at one side of the electrode assembly (120) and in communication with an interior of the housing (110a), and the electrolyte outlet pipe (12) is fixedly mounted to and in communication with the electrolyte inlet pipe (11); and
the electrolyte outlet pipe (12) defines a plurality of electrolyte outlet holes (123) that are arranged at intervals in sequence, each of the plurality of electrolyte outlet holes (123) extends, in a thickness direction of the electrolyte outlet pipe (12), through a pipe wall of the electrolyte outlet pipe (12) at one side of the electrolyte outlet pipe (12), and each of the plurality of electrolyte outlet holes (123) has an opening facing the electrode assembly (120) of the energy-storage device (100).

2. The energy-storage device (100) of claim 1, wherein
the electrolyte inlet pipe (11) is implemented as two electrolyte inlet pipes (11), wherein the two electrolyte inlet pipes (11) are spaced apart from each other, one of the two electrolyte inlet pipes (11) is located at one of two opposite sides of the electrode assembly (120) of the energy-storage device (100), and the other of the two electrolyte inlet pipes (11) is located at the other of the two opposite sides of the electrode assembly (120) of the energy-storage device (100); and
the electrolyte outlet pipe (12) is implemented as a plurality of electrolyte outlet pipes (12), wherein the plurality of electrolyte outlet pipes (12) are arranged at intervals in sequence and are all located at one side of the two electrolyte inlet pipes (11), and each of the plurality of electrolyte outlet pipes (12) is in communication with the two electrolyte inlet pipes (11).

3. The energy-storage device (100) of claim 2, wherein a number of the plurality of electrolyte outlet pipes (12) ranges from 6 to 10.

4. The energy-storage device (100) of claim 2 or 3, wherein
for each of the two electrolyte inlet pipes (11), the electrolyte inlet pipe (11) defines a plurality of mounting holes (113) arranged at intervals in a length direction of the electrolyte inlet pipe (11), wherein each of the plurality of mounting holes (113) extends, in a thickness direction of the electrolyte inlet pipe (11), through a pipe wall of the electrolyte inlet pipe (11) at one side of the electrolyte inlet pipe (11); and
for each of the plurality of electrolyte outlet pipes (12), the electrolyte outlet pipe (12) comprises a first portion (121) and two second portions (122), wherein the first portion (121) faces the electrode assembly (120) of the energy-storage device (100) in a thickness direction of the energy-storage device (100) and defines the plurality of electrolyte outlet holes (123); one of the two second portions (122) is fixedly connected to one of two opposite ends of the first portion (121), the other of the two second portions (122) is fixedly connected to the other of the two opposite ends of the first portion (121), and the two second portions (122) are both in communication with the first portion (121); in a width direction of the energy-storage device (100), one of the two second portions (122) is located at one of two opposite sides of the electrode assembly (120) of the energy-storage device (100), and the other of the two second portions (122) is located at the other of the two opposite sides of the electrode assembly (120) of the energy-storage device (100); and each of the two second portions (122) extends in a direction away from the first portion (121), one end of each of the two second portions (122) away from the first portion (121) is fixedly mounted to one of the plurality of mounting holes (113), and the two second portions (122) both are in communication with the electrolyte inlet pipe (11).

5. The energy-storage device (100) of claim 1, wherein a diameter of each of the plurality of electrolyte outlet holes (123) ranges from 0.5 mm to 1 mm.

6. The energy-storage device (100) of claim 1, wherein in the thickness direction of the energy-storage device (100), a ratio of a height of the electrolyte inlet pipe (11) to a height of the electrode assembly (120) ranges from 1/6 to 1/3.

7. The energy-storage device (100) of claim 1, further comprising an end cover assembly (130), wherein
the end cover assembly (130) is mounted to one side of the housing (110a) in a length direction of the housing (110a); and
the housing assembly (110) further comprises an insulation film (110c), wherein the insulation film (110c) is disposed inside the housing (110a) and defines an opening on one side of the insulation film (110c) facing the end cover assembly (130), the electrode assembly (120) and the electrolyte pipeline (110b) are both arranged inside the insulation film (110c), and the electrolyte pipeline (110b) is located between the electrode assembly (120) and the insulation film (110c).

8. The energy-storage device (100) of claim 7, wherein
the housing (110a) comprises a placement surface (114) and an appearance surface (115), wherein the appearance surface (115) is opposite to the placement surface (114) in a thickness direction of the energy-storage device (100); and
the end cover assembly (130) is provided with a placement indicator (130a), wherein the placement indicator (130a) is on one side of the end cover assembly (130) close to the placement surface (114).

9. An electricity-consumption apparatus, comprising the energy-storage device (100) of any one of claims 1 to 8, wherein the energy-storage device (100) is configured to power the electricity-consumption apparatus.

## Patentansprüche

1. Energiespeichervorrichtung (100), umfassend eine Elektrodenbaugruppe (120) und eine Gehäusebaugruppe (110), wobei
die Gehäusebaugruppe (110) ein Gehäuse (110a) und eine Elektrolytleitung (110b) umfasst, und die Elektrolytleitung (110b) und die Elektrodenbaugruppe (120) beide innerhalb des Gehäuses (110a) montiert sind;
die Elektrolytleitung (110b) zwischen der Elektrodenbaugruppe (120) und dem Gehäuse (110a) angeordnet ist und ein Elektrolyt-Einlassrohr (11) und ein Elektrolyt-Auslassrohr (12) umfasst, das Elektrolyt-Einlassrohr (11) an einer Seite der Elektrodenbaugruppe (120) angeordnet ist und in Verbindung mit einem Innenraum des Gehäuses (110a) steht, und das Elektrolyt-Auslassrohr (12) fest an dem Elektrolyt-Einlassrohr (11) montiert ist und mit diesem in Verbindung steht; und
das Elektrolyt-Auslassrohr (12) eine Vielzahl von Elektrolytauslasslöchern (123) definiert, die in Abständen nacheinander angeordnet sind, wobei sich jedes der Vielzahl von Elektrolytauslasslöchern (123) in einer Dickenrichtung des Elektrolyt-Auslassrohrs (12) durch eine Rohrwand des Elektrolyt-Auslassrohrs (12) an einer Seite des Elektrolyt-Auslassrohrs (12) erstreckt, und jedes der Vielzahl von Elektrolytauslasslöchern (123) eine Öffnung aufweist, die der Elektrodenbaugruppe (120) der Energiespeichervorrichtung (100) zugewandt ist.

2. Energiespeichervorrichtung (100) nach Anspruch 1, wobei das Elektrolyt-Einlassrohr (11) als zwei Elektrolyt-Einlassrohre (11) ausgeführt ist, wobei die beiden Elektrolyt-Einlassrohre (11) voneinander beabstandet sind, eines der beiden Elektrolyt-Einlassrohre (11) sich an einer von zwei gegenüberliegenden Seiten der Elektrodenbaugruppe (120) der Energiespeichervorrichtung (100) befindet, und das andere der beiden Elektrolyt-Einlassrohre (11) sich an der anderen von den zwei gegenüberliegenden Seiten der Elektrodenbaugruppe (120) der Energiespeichervorrichtung (100) befindet; und
das Elektrolyt-Auslassrohr (12) als eine Vielzahl von Elektrolyt-Auslassrohren (12) ausgeführt ist, wobei die Vielzahl von Elektrolyt-Auslassrohren (12) in Abständen nacheinander angeordnet sind und sich alle auf einer Seite der beiden Elektrolyt-Einlassrohre (11) befinden, und jedes der Vielzahl von Elektrolyt-Auslassrohren (12) in Verbindung mit den beiden Elektrolyt-Einlassrohren (11) steht.

3. Energiespeichervorrichtung (100) nach Anspruch 2, wobei eine Anzahl der Vielzahl von Elektrolyt-Auslassrohren (12) von 6 bis 10 beträgt.

4. Energiespeichervorrichtung (100) nach Anspruch 2 oder 3, wobei
für jedes der beiden Elektrolyt-Einlassrohre (11) das Elektrolyt-Einlassrohr (11) eine Vielzahl von in Abständen in einer Längenrichtung des Elektrolyt-Einlassrohrs (11) angeordneten Montagelöchern (113) definiert, wobei sich jedes der Vielzahl von Montagelöchern (113) in einer Dickenrichtung des Elektrolyt-Einlassrohrs (11) durch eine Rohrwand des Elektrolyt-Einlassrohrs (11) an einer Seite des Elektrolyt-Einlassrohrs (11) erstreckt; und
für jedes der Vielzahl von Elektrolyt-Auslassrohren (12) das Elektrolyt-Auslassrohr (12) einen ersten Abschnitt (121) und zwei zweite Abschnitte (122) umfasst, wobei der erste Abschnitt (121) der Elektrodenbaugruppe (120) der Energiespeichervorrichtung (100) in einer Dickenrichtung der Energiespeichervorrichtung (100) zugewandt ist und die Vielzahl von Elektrolytauslasslöchern (123) definiert; einer der beiden zweiten Abschnitte (122) fest mit einem von zwei gegenüberliegenden Enden des ersten Abschnitts (121) verbunden ist, der andere der beiden zweiten Abschnitte (122) fest mit dem anderen der beiden gegenüberliegenden Enden des ersten Abschnitts (121) verbunden ist, und die beiden zweiten Abschnitte (122) beide in Verbindung mit dem ersten Abschnitt (121) stehen; in einer Breitenrichtung der Energiespeichervorrichtung (100) einer der beiden zweiten Abschnitte (122) an einer von zwei gegenüberliegenden Seiten der Elektrodenbaugruppe (120) der Energiespeichervorrichtung (100) angeordnet ist, und der andere der beiden zweiten Abschnitte (122) an der anderen von zwei gegenüberliegenden Seiten der Elektrodenbaugruppe (120) der Energiespeichervorrichtung (100) angeordnet ist; und jeder der beiden zweiten Abschnitte (122) sich in eine Richtung von dem ersten Abschnitt (121) weg erstreckt, ein Ende jedes der beiden zweiten Abschnitte (122) von dem ersten Abschnitt (121) weg an einem der Vielzahl von Montagelöchern (113) fest montiert ist, und die beiden zweiten Abschnitte (122) beide in Verbindung mit dem Elektrolyt-Einlassrohr (11) stehen.

5. Energiespeichervorrichtung (100) nach Anspruch 1, wobei ein Durchmesser jedes der Vielzahl von ElektrolytAuslasslöchern (123) von 0,5 mm bis 1 mm beträgt.

6. Energiespeichervorrichtung (100) nach Anspruch 1, wobei in Dickenrichtung der Energiespeichervorrichtung (100) ein Verhältnis einer Höhe des Elektrolyt-Einlassrohrs (11) zu einer Höhe der Elektrodenbaugruppe (120) von 1/6 bis 1/3 beträgt.

7. Energiespeichervorrichtung (100) nach Anspruch 1, ferner umfassend eine Enddeckelbaugruppe (130), wobei
die Enddeckelbaugruppe (130) an einer Seite des Gehäuses (110a) in einer Längsrichtung des Gehäuses (110a) montiert ist; und
die Gehäusebaugruppe (110) ferner eine Isolierfolie (110c) umfasst, wobei die Isolierfolie (110c) innerhalb des Gehäuses (110a) angeordnet ist und eine Öffnung auf einer Seite der Isolierfolie (110c) definiert, die der Enddeckelbaugruppe (130) zugewandt ist, die Elektrodenbaugruppe (120) und die Elektrolytleitung (110b) beide innerhalb der Isolierfolie (110c) angeordnet sind, und die Elektrolytleitung (110b) zwischen der Elektrodenbaugruppe (120) und der Isolierfolie (110c) angeordnet ist.

8. Energiespeichervorrichtung (100) nach Anspruch 7, wobei das Gehäuse (110a) eine Auflagefläche (114) und eine Erscheinungsfläche (115) umfasst, wobei die Erscheinungsfläche (115) der Auflagefläche (114) in einer Dickenrichtung der Energiespeichervorrichtung (100) gegenüberliegt; und
die Enddeckelbaugruppe (130) mit einem Platzierungsindikator (130a) versehen ist, wobei sich der Platzierungsindikator (130a) auf einer Seite der Enddeckelbaugruppe (130) nahe der Platzierungsfläche (114) befindet.

9. Stromverbrauchseinrichtung, die die Energiespeichervorrichtung (100) nach einem der Ansprüche 1 bis 8 umfasst, wobei die Energiespeichervorrichtung (100) konfiguriert ist, um die Stromverbrauchseinrichtung mit Leistung zu versorgen.

## Revendications

1. Dispositif de stockage d'énergie (100), comportant un ensemble d'électrode (120) et un ensemble de boîtier (110), dans lequel
l'ensemble de boîtier (110) comporte un boîtier (110a) et une conduite d'électrolyte (110b), et la conduite d'électrolyte (110b) et l'ensemble d'électrode (120) sont tous deux montés à l'intérieur du boîtier (110a) ;
la conduite d'électrolyte (110b) est située entre l'ensemble d'électrode (120) et le boîtier (110a) et comporte un tuyau d'entrée d'électrolyte (11) et un tuyau de sortie d'électrolyte (12), le tuyau d'entrée d'électrolyte (11) est situé au niveau d'un côté de l'ensemble d'électrode (120) et en communication avec un intérieur du boîtier (110a), et le tuyau de sortie d'électrolyte (12) est monté de manière fixe sur et en communication avec le tuyau d'entrée d'électrolyte (11) ; et
le tuyau de sortie d'électrolyte (12) définit une pluralité de trous de sortie d'électrolyte (123) qui sont agencés à intervalles de manière séquentielle, chacun de la pluralité de trous de sortie d'électrolyte (123) s'étend, dans une direction d'épaisseur du tuyau de sortie d'électrolyte (12), à travers une paroi de tuyau du tuyau de sortie d'électrolyte (12) au niveau d'un côté du tuyau de sortie d'électrolyte (12), et chacun de la pluralité de trous de sortie d'électrolyte (123) présente une ouverture orientée vers l'ensemble d'électrode (120) du dispositif de stockage d'énergie (100).

2. Dispositif de stockage d'énergie (100) selon la revendication 1, dans lequel
le tuyau d'entrée d'électrolyte (11) est mis en œuvre en tant que deux tuyaux d'entrée d'électrolyte (11), dans lequel les deux tuyaux d'entrée d'électrolyte (11) sont espacés l'un de l'autre, l'un des deux tuyaux d'entrée d'électrolyte (11) est situé au niveau de l'un des deux côtés opposés de l'ensemble d'électrode (120) du dispositif de stockage d'énergie (100), et l'autre des deux tuyaux d'entrée d'électrolyte (11) est situé au niveau de l'autre des deux côtés opposés de l'ensemble d'électrode (120) du dispositif de stockage d'énergie (100) ; et
le tuyau de sortie d'électrolyte (12) est mis en œuvre en tant que pluralité de tuyaux de sortie d'électrolyte (12), dans lequel la pluralité de tuyaux de sortie d'électrolyte (12) sont agencés à intervalles de manière séquentielle et sont tous situés au niveau d'un côté des deux tuyaux d'entrée d'électrolyte (11), et chacun de la pluralité de tuyaux de sortie d'électrolyte (12) est en communication avec les deux tuyaux d'entrée d'électrolyte (11).

3. Dispositif de stockage d'énergie (100) selon la revendication 2, dans lequel un nombre de la pluralité de tuyaux de sortie d'électrolyte (12) va de 6 à 10.

4. Dispositif de stockage d'énergie (100) selon la revendication 2 ou 3, dans lequel
pour chacun des deux tuyaux d'entrée d'électrolyte (11), le tuyau d'entrée d'électrolyte (11) définit une pluralité de trous de montage (113) agencés à intervalles dans une direction longitudinale du tuyau d'entrée d'électrolyte (11), dans lequel chacun de la pluralité de trous de montage (113) s'étend, dans une direction d'épaisseur du tuyau d'entrée d'électrolyte (11), à travers une paroi de tuyau du tuyau d'entrée d'électrolyte (11) au niveau d'un côté du tuyau d'entrée d'électrolyte (11) ; et
pour chacun de la pluralité de tuyaux de sortie d'électrolyte (12), le tuyau de sortie d'électrolyte (12) comporte une première partie (121) et deux secondes parties (122), dans lequel la première partie (121) fait face à l'ensemble d'électrode (120) du dispositif de stockage d'énergie (100) dans une direction d'épaisseur du dispositif de stockage d'énergie (100) et définit la pluralité de trous de sortie d'électrolyte (123) ; l'une des deux secondes parties (122) est reliée de manière fixe à l'une de deux extrémités opposées de la première partie (121), l'autre des deux secondes parties (122) est reliée de manière fixe à l'autre des deux extrémités opposées de la première partie (121), et les deux secondes parties (122) sont toutes deux en communication avec la première partie (121) ; dans une direction de largeur du dispositif de stockage d'énergie (100), l'une des deux secondes parties (122) est située au niveau de l'un de deux côtés opposés de l'ensemble d'électrode (120) du dispositif de stockage d'énergie (100), et l'autre des deux secondes parties (122) est située au niveau de l'autre des deux côtés opposés de l'ensemble d'électrode (120) du dispositif de stockage d'énergie (100) ; et chacune des deux secondes parties (122) s'étend dans une direction éloignée de la première partie (121), une extrémité de chacune des deux secondes parties (122) éloignée de la première partie (121) est montée de manière fixe sur l'un de la pluralité de trous de montage (113), et les deux secondes parties (122) sont toutes deux en communication avec le tuyau d'entrée d'électrolyte (11).

5. Dispositif de stockage d'énergie (100) selon la revendication 1, dans lequel un diamètre de chacun de la pluralité de trous de sortie d'électrolyte (123) va de 0,5 mm à 1 mm.

6. Dispositif de stockage d'énergie (100) selon la revendication 1, dans lequel dans la direction d'épaisseur du dispositif de stockage d'énergie (100), un rapport d'une hauteur du tuyau d'entrée d'électrolyte (11) sur une hauteur de l'ensemble d'électrode (120) va de 1/6 à 1/3.

7. Dispositif de stockage d'énergie (100) selon la revendication 1, comportant en outre un ensemble de couvercle d'extrémité (130), dans lequel
l'ensemble de couvercle d'extrémité (130) est monté sur un côté du boîtier (110a) dans une direction longitudinale du boîtier (110a) ; et
l'ensemble de boîtier (110) comporte en outre un film isolant (110c), dans lequel le film isolant (110c) est disposé à l'intérieur du boîtier (110a) et définit une ouverture sur un côté du film isolant (110c) faisant face à l'ensemble de couvercle d'extrémité (130), l'ensemble d'électrode (120) et la conduite d'électrolyte (110b) sont tous deux agencés à l'intérieur du film isolant (110c), et la conduite d'électrolyte (110b) est située entre l'ensemble d'électrode (120) et le film isolant (110c).

8. Dispositif de stockage d'énergie (100) selon la revendication 7, dans lequel
le boîtier (110a) comporte une surface de mise en place (114) et une surface d'apparence (115), dans lequel la surface d'apparence (115) est opposée à la surface de mise en place (114) dans une direction d'épaisseur du dispositif de stockage d'énergie (100) ; et
l'ensemble de couvercle d'extrémité (130) est pourvu d'un indicateur de mise en place (130a), dans lequel l'indicateur de mise en place (130a) est sur un côté de l'ensemble de couvercle d'extrémité (130) proche de la surface de mise en place (114).

9. Appareil de consommation d'électricité, comportant le dispositif de stockage d'énergie (100) selon l'une quelconque des revendications 1 à 8, dans lequel le dispositif de stockage d'énergie (100) est configuré pour alimenter en énergie l'appareil de consommation d'électricité.
